**Europäisches Patentamt**

**European Patent Office**

**Office européen des brevets**

(19)

(11) Publication number : **0 299 729 B1**

(12) **EUROPEAN PATENT SPECIFICATION**

(45) Date of publication of patent specification :
29.01.92 Bulletin 92/05

(51) Int. Cl.⁵ : **B60C 11/01**

(21) Application number : **88306384.4**

(22) Date of filing : **13.07.88**

(54) **Radial tyre.**

(30) Priority : **13.07.87 JP 107729/87**

(43) Date of publication of application :
**18.01.89 Bulletin 89/03**

(45) Publication of the grant of the patent :
**29.01.92 Bulletin 92/05**

(84) Designated Contracting States :
**DE FR GB IT**

(56) References cited :
**EP-A- 0 197 735**
**EP-A- 0 205 233**
**DE-A- 3 609 488**

(73) Proprietor : **SUMITOMO RUBBER INDUSTRIES
LIMITED
No. 1-1, Tsutsui-cho 1-chome
Chuo-ku Kobe-shi Hyogo 651 (JP)**

(72) Inventor : **Fujiwara, Kenichi
27 Nishi Jiyuugaoka 2-chome Shimimicho
Miki-shi Hyogo-ken (JP)**

(74) Representative : **Stewart, Charles Geoffrey
SP TYRES UK LIMITED Tyre Technical
Division
Fort Dunlop Birmingham B24 9QT (GB)**

EP 0 299 729 B1

## Description

The present invention relates to a radial tyre suited particularly but not exclusively to trucks, busses or other heavy vehicles. The tyre is improved in durability for high speed use and in wet grip characteristics (wet-road holding property) and has a tread pattern capable of reducing irregular or partial wear in the shoulder blocks of both shoulder portions of the tread.

In general, radial tyres, as shown in Figure 5(a) (which corresponds to the preamble of claim 1 and disclosed in EP-A-0 197 735 and EP-A-0 205 233, for heavy loads are constructed with a toroidal carcass C in which carcass cords are arranged in the radial direction and both end portions thereof are turned up around bead cores, a breaker Q, which is composed of layers of steel cords arranged at relatively low angles to the circumferential direction of tyre and which is located outside the crown portion of the carcass C, and a tread portion R disposed outside the breaker Q. The tread portion is provided with a tread pattern on its surface forming ribs, lugs, a combination of ribs and lugs, blocks or the like to provide the driving effect, braking effect, direction controlling effect, steering stability, and other necessary effects of the tyres.

In this kind of conventional tyre, however, simultaneous compliance with the requirements for steering stability, service life under abrasion, durability and the like necessarily involves an increase in the thickness of the tread rubber, particularly at both edge portions of the tread. As a result, conventional tyres of this kind have great heat generation resulting from repeated deformation of such thick treads under service conditions of high load and high speed. Moreover, such heat generation causes the rubber to be exfoliated at both edges of the breaker, conjointly with concentration of stresses at both edges of the breaker.

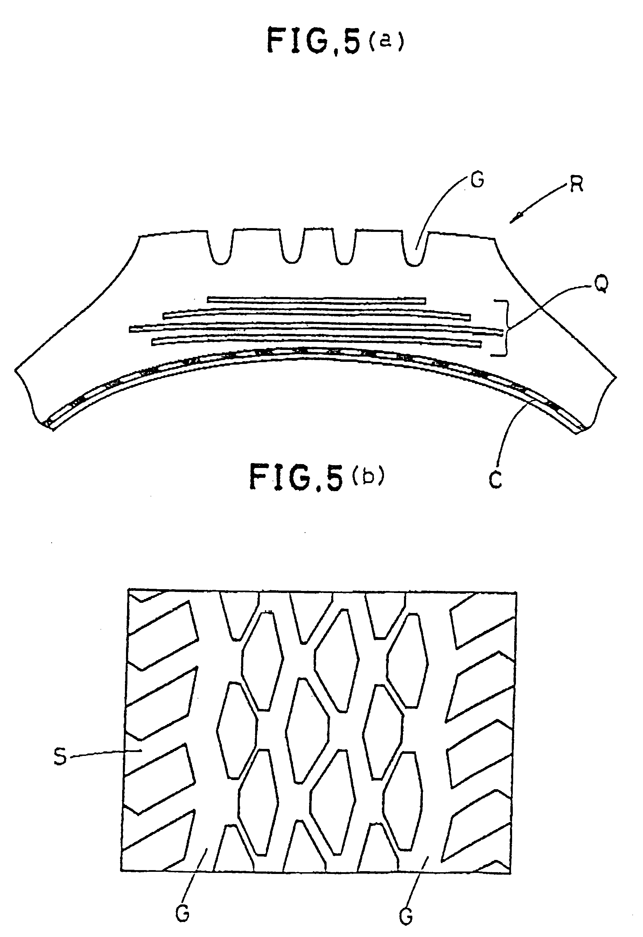

On the other hand, in order to improve the heat radiating effect and wet grip property of the tread rubber, it is proposed to provide transverse grooves S in both side regions of the tread which are defined by circumferentially extending main grooves G, to form a great number of shoulder blocks B, as shown in Figure 5(b). However, this method causes so-called "heal-and-toe wear" in which the blocks B are partially subjected to abrasion in early stage.

It is an object of the present invention to eliminate the above-mentioned disadvantages of conventional radial tyres.

A further object of the present invention is to provide a radial tyre in which the durability is improved and the heel-and-toe wear is greatly reduced without impairing the wet grip property.

According to the present invention a radial tyre comprises a tread having at least two zig-zag longitudinal grooves extending in the circumferential direction of the tyre, and transverse grooves extending from each of the two outermost grooves of said longitudinal grooves to each tread edge to form shoulder blocks positioned circumferentially at intervals such that the ratio between adjacent intervals is in the range 1.0 to 1.3, characterised in that the difference between the maximum and minimum values of the totals of the areas of the circumferentially opposed sides of each of said shoulder blocks is within 10% of the maximum value.

Preferably at least 4 shoulder blocks are formed per pitch of the zig-zag shape.

An embodiment of the present invention will now be described, by way of example, with reference to the accompanying drawings, in which:-

Fig. 1 is a front view showing an embodiment of the tread pattern of the radial tyre according to the present invention;

Fig. 2 is a sectional view taken along the line I-I of Fig. 1:

Fig. 3 is a schematic view of the shoulder block of the radial tyre;

Fig. 4 is a schematic view showing an embodiment of the transverse groove of the tyre according to the present invention;

Fig. 5(a) is a partial sectional view of a prior art tyre;

Fig. 5(b) is a plan view showing the tread pattern of the tyre of the prior art;

Fig. 6(a) is a plan view showing the tread pattern of the tyre of the invention used in the Examples described after;

Fig. 6(b) is a sectional view taken along the line X-X of Fig. 6(a)

Fig. 7 is a graph showing the relationship between the total area of the circumferentially opposed sides of each shoulder block and the abrasive amount of each shoulder block.

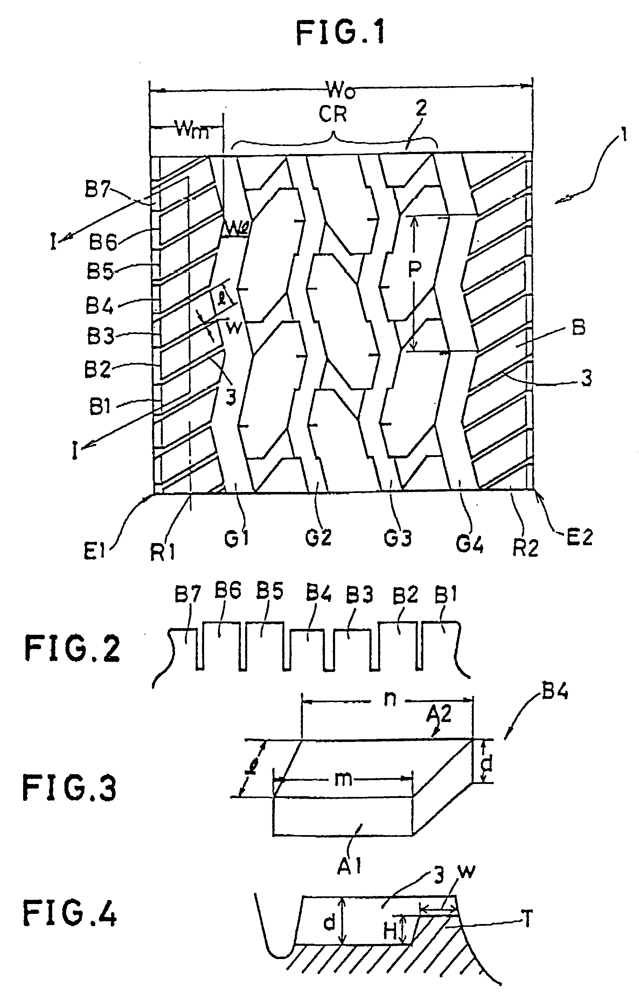

Referring to Figs 1 to 4, a radial tyre 1 of the present invention has, in a tread 2 and four zigzag-shaped longitudinal grooves G1, G2 G3 and G4 extending circumferentially of the tyre. The tread 2 has side portions R1 and R2 formed in a zigzag-shaped configuration between the outermost longitudinal grooves G1, G4 and the end portions E1, E2 of the tread. These side portions R1 and R2 are provided with a great number of transverse grooves 3 which connect from the above-mentioned longitudinal grooves G1 and G4 to the edge portions E1 and E2 of the tread 2 so that the above-mentioned side portions R1 and R2 of the tread are divided into a large number of shoulder blocks B1, B2....Bn, thus providing enhancement of the heat radiating effect and wet-road holding effect of the tyre. The transverse grooves may be arranged at an angle of 0 to 45 degrees to the axial direction of the tyre. In the embodiment shown in Fig. 1, the transverse grooves are arranged at 30 degrees to the axial direction.

The transverse grooves 3 have a depth d of 50 to 110% of the depth of the longitudinal grooves and a width of 0.5 to 5 mm, and are located at substantially regular intervals 1 of 5 to 20 mm to provide effective wet-road holding effect and heat radiating effect. Also, the transverse grooves are four or more in number in each pitch P of the zigzag longitudinal grooves. If the number of transverse grooves are less than 4 per pitch P, the heat radiating effect and wet-road holding effect are poor. Also, the regular intervals required for the location of the transverse grooves must range between 1 and 1.3 in terms of the interval ratio between every two adjacent transverse grooves. If this ratio exceeds 1.3. a great variation is caused among the shoulder blocks in their contact pressure against the road and this causes irregular wear of the tyre.

Moreover, the total area of the two circumferentially opposed sides of the shoulder blocks B1....Bn, which can be expressed in terms of the value of (md + nd) with reference to Figure 3 showing the shoulder block B4 typically is required to remain constant in any shoulder block within the limits of 10 percent difference. That is to say, the difference between the maximum value and minimum value of said area totals must be restricted to 10% of the maximum value. In the term (md + nd), the symbols "m" and "n" respectively correspond to the length of the rectangular side A1 and the rectangular side A2 of each shoulder block, as is apparent from Figure 3 of the shoulder block B4 typically depicted.

The inventor considered that the zigzag-shaped longitudinal grooves make differences in the rigidity of the shoulder blocks sectionally formed by means of at least four transverse grooves made at substantially regular intervals of place over each pitch of the zigzag-shaped longitudinal grooves in both zigzag - shaped side portions of the tread, and as a result, shoulder blocks of higher rigidity carry a heavy load, thereby causing the occurrence of greater wear on the tyre portions of such shoulder blocks. That is to say as illustrated in Figure 2, the shoulder blocks of smaller transverse length such as the shoulder blocks B3 and B4 are higher in their rigidity on their ends and greater in their wear than the other shoulder blocks, for example, B1 and B2.

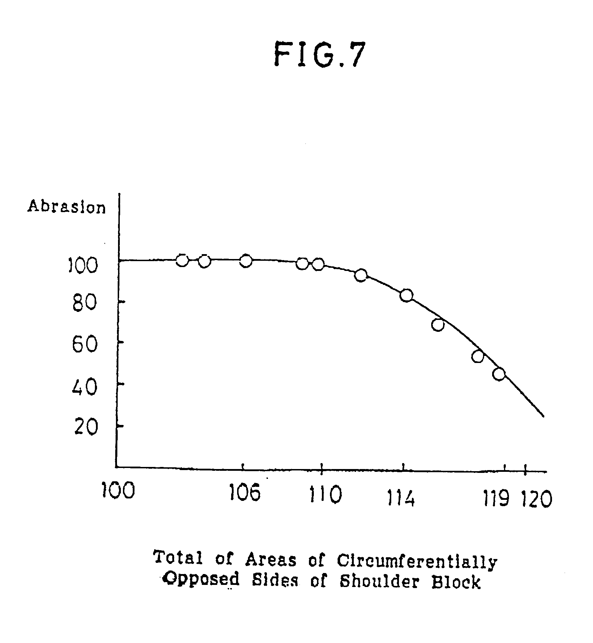

The rigidity of each shoulder block is in inverse proportion to the total of the areas of the circumferentially opposed sides A1 and A2 thereof. For this reason, in order to allow the shoulder blocks to hold constant rigidity, the shoulder blocks are respectively required to have the substantially same total of such areas. It has been experimentally shown that any excess of 10 percent ratio of the greatest area total to the smallest area total of the circumferentially opposed sides increases the difference in abrasive amount among the shoulder blocks, as shown in the graph of Figure 7 in which the totals of the areas of the circumferentially opposed sides of the shoulder blocks are plotted along the abscissa, and the abrasive amounts of the shoulder blocks along the ordinate.

Under these circumstances, in order to adjust the areas of the circumferentially opposed sides A1 and A2, the depth d of the transverse grooves 3 is changed, and moreover, a tie bar T is formed in a variety of shapes on the bottom portion of each or any of the opposed sides so that the bottom of a corresponding transverse groove is raised in shape as shown in Figure 4.

In the present invention, it is preferable that the maximum width Wm of the side portions R1, R2 of the tread ranges between 10% and 30% of the tread width Wo, and the width Wl of the longitudinal grooves G1 G4 between 2% and 5% of the tread width Wo. Also, the longitudinal grooves are required to be at least two in number, and the crown region CR interposed between the longitudinal grooves G1 and G4 which form the side portions R1 and R2 of the tread may have either a ribbed shape or a block shape. In this embodiment a block shape in the crown region is used.

Moreover, although the present invention is best applied to radial tyres for trucks, buses and other heavy duty type vehicles, it is to be understood that the present invention can be also applied to radial tyres for pickup trucks and other small-sized vehicles wherever the tyres have the longitudinal main grooves made in a zigzag-shaped configuration.

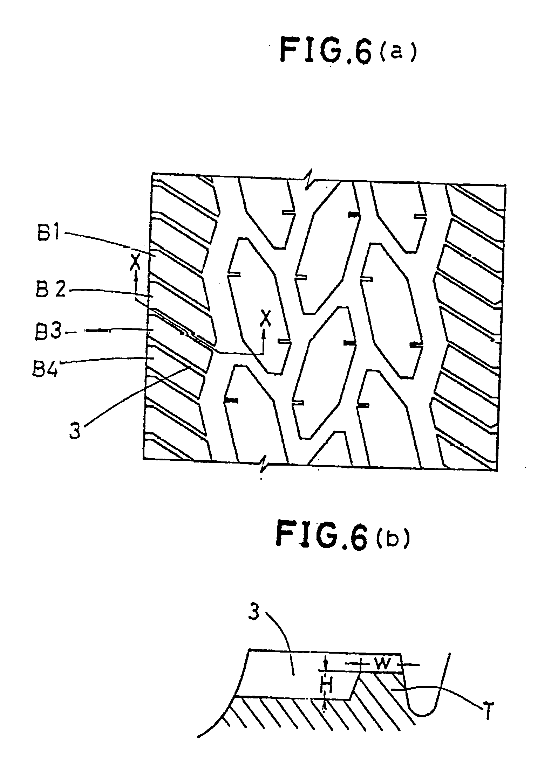

As a detached example a radial tyre was made with a tread pattern as shown in Fig. 6(a), and the transverse grooves 3 sectioning the shoulder portions into blocks B2 and B3 were provided with tie bars 3 as shown in Figure 6(b) to furnish the transverse grooves with raised shapes. A second radial tyre was also made for comparative use in which the transverse grooves were not equipped with the tie bars both were subjected to a 60,000 km running tests under test conditions of 7.25 kg/cm internal air pressure. The tyres were mounted on 7.50 V x 20 rims, and 2,425 kg load was applied to both tyres to compare the wear of the shoulder blocks. The road was a 100% asphalt-paved road. Specifications for the shoulder blocks of the two tyres are as given in Tables 1 and 2 hereinafter presented. The degree of wear of the shoulder blocks of both tyres are indicated in the form of index numbers in Tables 1 and 2. The smallest index number signifies a degree of wear which is least. Tables 1 and 2 show that in the tyre according to the present invention, the shoulder blocks were substantially equalized in their wear to a difference of 2 percent or less, while on the other hand, the second tyre of the conventional kind for comparative use had a maximum of 50 percent difference in the degree of wear among the shoulder blocks thereof, and undergoes great irregular wear in the shoulder blocks themselves. As is apparent from the results of the comparative tests, the present invention produces a great effect in reducing the wear or abrasion of the radial tyres.

Table 1:  Wear Test Results of Tyre of the Invention

| Shoulder Blocks | Circumferentially Opposed Side Area A1, (m x d)=(W x x H) | Circumferentially Opposed Side Area A2, (m x d)=(W x x H) | Ratio of (A1 + A2) among Shoulder Blocks | Index Number of Wear |
|---|---|---|---|---|
| B1 | 28 x 13.5 | 34 x 13.5 | 103 | 99 |
| B2 | 34.5 x 13.5 | 37 x 13.5 14 x8.5 (*1) | 104 | 98 |
| B3 | 36.5 x 13.5 14 x 8.5 (*2) | 32 x 13.5⁻ | 100 | 100 |
| B4 | 32.0 x 13.5⁻ | 28 x 13.5 | 100 | 100 |

Table 2:  Wear Test Results of Conventional Type Tyre of Comparative Use

| Shoulder Blocks | Circumferentially Opposed Side Area A1, (m x d) | Circumferentially Opposed Side Area A2, (n x d) | Ratio of (A1 + A2) among shoulder Blocks | Index Number of Wear |
|---|---|---|---|---|
| B1 | 28 x 13.5 | 34 x 13.5 | 103 | 99 |
| B2 | 34.5 x 13.5 | 37 x 13.5 | 119 | 50 |
| B3 | 36.5 x 13.5 | 32 x 13.5 | 114 | 85 |
| B4 | 32.0 x 13.5 | 28 x 13.5 | 100 | 100 |

Notes (*1) and (*2):  It is to be noted that the marks (*1) and (*2) show that the transverse groove between the shoulder blocks B2 and B3 is provided with a tie bar of 8.5 mm in height from the bottom thereof and 14 mm in width to limit to 10 percent or less the difference in  total area of the circumferentially opposed sides A1 and A2 among the shoulder blocks.

As is apparent from the foregoing description, the radial tyre of the present invention has at least four shoulder blocks circumferentially formed at regular intervals within an each pitch of the zigzag-shaped longitudinal grooves in the side portions of the tread between the zigzag-shaped longitudinal grooves and the ends of the tread to achieve improvement in the wet-road holding property and heat radiating effect of the tyre, and moreover, the tyre is arranged to design to any desired shape the depth or bottom or bottoms of the transverse groove or grooves which sectionally form the shoulder blocks, whereby the shoulder blocks are allowed to remain constant in their rigidity. For this reason, the radial tyre of the present invention achieves the prevention of irregular or partial wear thereof, and is simultaneously capable of reducing the exfoliation of the rubber from the edge portions of the breaker thereof without any impairment of the wet-road holding property and the heat radiating effect which can be caused by the transverse grooves. As a result, the radial tyre of the present invention is more improved in the durability thereof.

## Claims

1. A radial tyre comprising a tread (2) having at least two zig-zag longitudinal grooves (G1, G2, G3, G4) extending in the circumferential direction of the tyre, and transverse grooves (3) extending from each of the two outermost grooves (G1, G4) of said longitudinal grooves to each tread edge (E1, E2) to form shoulder blocks (B) positioned circumferentially at intervals (I) such that the ratio between adjacent intervals is in the range 1.0 to 1.3, characterised in that the difference between the maximum and minimum values of the totals (A1+A2) of the areas of the circumferentially opposed sides (A1, A2) of each of said shoulder blocks (B) is within 10% of the maximum value.

2. A radial tyre according to Claim 1 characterised in that at least 4 shoulder blocks (B) are provided per pitch (P) of the zig-zag-shaped longitudinal groove (G1, G4).

3. A radial tyre according to Claim 1 or 2 characterised in that each of said shoulder blocks (B) has a width of 5 to 20 mm in the circumferential direction.

4. A radial tyre according to Claim 1, 2 or 3 characterised in that the transverse grooves (3) have a depth (d) of 50 to 110% of the depth of said longitudinal groove (G1, G4) and a width (W) of 0.5 to 5mm.

5. A radial tyre according to Claim 1, 2, 3 or 4 characterised in that the maximum distance between the outer wall of said longitudinal groove (G1, G4) and the tread edge (E1, E2) is from 10 to 30% of the width (Wo) of said tread.

6. A radial tyre according to any of Claims 1 to 5 characterised in that the longitudinal grooves (G1, G4) have a width (WI) of 2 to 5% of the width (Wo) of said tread.

7. A radial tyre according to any of Claims 1 to 6 characterised in that two zig-zag-shaped longitudinal grooves (G2, G3) are provided between said two outermost longitudinal grooves (G1, G4).

## Patentansprüche

1. Radialreifen mit einem Laufstreifen (2), der mindestens zwei Zickzack-Längsnuten (G1, G2, G3, G4) besitzt, die sich in Umfangsrichtung des Reifens erstrecken, und Quernuten (3), die sich von jeder der beiden äußersten Nuten (G1, G4) der Längsnuten zu der jeweiligen Laufstreifenkante (E1, E2) erstrecken, um in Umfangsrichtung mit solchen Abständen (1) angeordnete Schulterblöcke (B) zu bilden, daß das Verhältnis benachbarter Abstände im Bereich von 1,0 bis 1,3 liegt, dadurch gekennzeichnet, daß die Differenz zwischen den Maximal- und Minimal-Werten der Summen (A1 + A2) der Flächengrößen der in Umfangsrichtung einander gegenüberliegenden Seitenwände (A1, A2) jedes der Schulterblöcke (B) innerhalb von 10 % des Maximalwertes liegt.

2. Radialreifen nach Anspruch 1, dadurch gekennzeichnet, daß mindestens vier Schulterblöcke (B) pro Periodenlänge (P) der Zickzack-Längsnut (G1, G4) vorgesehen sind.

3. Radialreifen nach Anspruch 1 oder 2, dadurch gekennzeichnet, daß jeder Schulterblock (B) eine Breite von 5 bis 20 mm in Umfangsrichtung besitzt.

4. Radialreifen nach Anspruch 1, 2 oder 3, dadurch gekennzeichnet, daß die Quernuten (3) eine Tiefe (d) von 50 bis 110 % der Tiefe der Längsnuten (G1, G4) und eine Breite (W) von 0,5 bis 55 mm besitzen.

5. Radialreifen nach Anspruch 1, 2, 3 oder 4, dadurch gekennzeichnet, daß der maximale Abstand zwischen der Außenwand der Längsnut (G1, G4) und der Laufstreifenkante (E1, E2) 10 bis 30 % der Breite (Wo) des Laufstreifens beträgt.

6. Radialreifen nach einem der Ansprüche 1 bis 5, dadurch gekennzeichnet, daß die Längsnuten (G1, G4) eine Breite (WI) von 2 bis 5 % der Breite (Wo) des Laufstreifens besitzen.

7. Radialreifen nach einem der Ansprüche 1 bis 6, dadurch gekennzeichnet, daß zwischen den beiden äußersten-Längsnuten (G1, G4) zwei Zickzack-Längsnuten (G2, G3) vorgesehen sind.

**Revendications**

1. Pneumatique à carcasse radiale comprenant une bande de roulement (2) ayant au moins deux gorges longitudinales sinueuses (G1, G2, G3, G4) disposées dans la direction circonférentielle du pneumatique, et des gorges transversales (3) partant de chacune des deux plus externes (G1, G4) des gorges longitudinales vers chaque bord (E1, E2) de la bande de roulement afin que des blocs d'épaulement (B) placés circonférentiellement soient formés à des intervalles (1) tels que le rapport entre les intervalles est compris entre 1,0 et 1,3, caractérisé en ce que la différence entre les valeurs maximale et minimale des sommes (A1 + A2) des surfaces des faces opposées circonférentiellement (A1, A2) de chacun des blocs d'épaulement (B) ne diffère pas de plus de 10 % de la valeur maximale.

2. Pneumatique à carcasse radiale selon la revendication 1, caractérisé en ce que quatre blocs (B) d'épaulement au moins sont présents par pas (P) de la gorge longitudinale de forme sinueuse (G1, G4).

3. Pneumatique à carcasse radiale selon la revendication 1 ou 2, caractérisé en ce que chacun des blocs d'épaulement (B) a une largeur de 5 à 20 mm dans la direction circonférentielle.

4. Pneumatique à carcasse radiale selon la revendication 1, 2 ou 3, caractérisé en ce que les gorges transversales (3) ont une profondeur (d) comprise entre 50 et 110 % de la profondeur de la gorge longitudinale (G1, G4) et une largeur (W) de 0,5 à 5 mm.

5. Pneumatique à carcasse radiale selon la revendication 1, 2, 3 ou 4, caractérisé en ce que la distance maximale entre la paroi externe de la gorge longitudinale (G1, G4) et le bord de la bande de roulement (E1, E2) est comprise entre 10 et 30 % de la largeur (Wo) de la bande de roulement.

6. Pneumatique à carcasse radiale selon l'une quelconque des revendications 1 à 5, caractérisé en ce que les gorges longitudinales (G1, G4) ont une largeur (Wl) comprise entre 2 et 5 % de la largeur (Wo) de la bande de roulement.

7. Pneumatique à carcasse radiale selon l'une quelconque des revendications 1 à 6, caractérisé en ce que deux gorges longitudinales (G2, G3) de forme sinueuse sont placées entre les deux gorges longitudinales externes (G1, G4).

# FIG.1

# FIG.2

# FIG.3

# FIG.4

# FIG,5(a)

# FIG,5(b)

# FIG.6 (a)

B1
X
B 2
B3
B4
3

# FIG.6 (b)

3
W
H
T

# FIG.7

Total of Areas of Circumferentially
Opposed Sides of Shoulder Block